# EUROPÄISCHE PATENTSCHRIFT

(11) **EP 1 593 818 B1**
(45) Veröffentlichungstag und Bekanntmachung des Hinweises auf die Patenterteilung: **14.03.2007**
(21) Anmeldenummer: 05008368.2
(22) Anmeldetag: 18.04.2005
(51) Int. Cl.: F01D 25/16, F04D 29/04, F16C 17/04, F16C 32/06

(54) **Turbomaschine mit einem hydrodynamischen und einem hydrostatischen Axiallager**
Turbomachine with a hydrodynamic and a hydrostatic axial bearing
Turbomachine avec un palier axial hydrodynamique et un palier axial hydrostatique

(30) Priorität: 07.05.2004 DE 102004023149
(43) Veröffentlichungstag der Anmeldung: 09.11.2005
(73) Patentinhaber: ATLAS COPCO ENERGAS GMBH, 50999 Köln (DE)
(72) Erfinder: Sopper, Alfred Dipl.-Ing., 50169 Kerpen (DE); Leonhard, Martin Dipl.-Ing., Dr., 50321 Brühl (DE)
(74) Vertreter: Albrecht, Rainer Harald

(56) Entgegenhaltungen:
- GB-A- 2 202 302
- US-A- 3 453 032
- US-A- 3 913 989
- US-A- 5 209 652

## Beschreibung

Die Erfindung betrifft eine Turbomaschine mit Rotorwelle, die in einer ein hydrodynamisches Axiallager enthaltenden Lageranordnung gelagert ist, und mit auf der Rotorwelle angeordnetem Laufrad. Mit dem Ausdruck "hydrodynamische Axiallager" sind handelsübliche Axialgleitlager gemeint, welche im Turbomaschinenbau häufig eingesetzt werden.

Bei den in der Praxis bekannten Turbomaschinen mit den eingangs beschriebenen Merkmalen dient das hydrodynamische Axiallager sowohl zur Aufnahme der im Stillstand der Rotorwelle auftretenden Axialkräfte als auch zur Aufnahme der Axialschübe, die während des Betriebes der Turbomaschine auftreten und von den Druckbedingungen am Laufrad, dem Laufradtyp sowie von der Wellenabdichtungsgeometrie abhängen. Insbesondere bei als Verdichter ausgebildeten Turbomaschinen führt der hohe Vordruck des zu verdichtenden Fluids zu hohen Axialschüben im Stillstand und damit auch beim Anfahren der Maschine. Bei der Auslegung des hydrodynamischen Axiallagers besteht daher das Problem, dass dieses sowohl die während des Stillstandes und des Anfahrens der Turbomaschine vorliegenden Axialkräfte als auch die sich während des Betriebes bei Nenndrehzahl einstellenden axialen Kräfte aufnehmen muss. Eine allein auf den Betrieb bei Nenndrehzahl abgestimmte Auslegung des hydrodynamischen Axiallagers ist daher nicht möglich, so dass entsprechende Nachteile hinsichtlich der Verlustleistung des Lagers als auch seiner Dimensionierung in Kauf genommen werden müssen. Turbomaschinen mit einem hydrodynamischen und einem hydrostatischen Axiallager sind z.B. aus US 5 209 652, US 3 453 032, GB 2 202 302 und US 3 913 989 bekannt.

Der Erfindung liegt die Aufgabe zu Grunde, eine Turbomaschine mit den eingangs beschriebenen Merkmalen anzugeben, die eine auf die Betriebsbedingungen bei Nenndrehzahl optimal abgestimmte Auslegung und Konstruktion des hydrodynamischen Axiallagers erlaubt.

Erfindungsgemäß wird die Aufgabe dadurch gelöst, dass in unmittelbarer Nähe des hydrodynamischen Axiallagers zusätzlich ein hydrostatisches Axiallager vorgesehen ist, welches die im Stillstand auf die Rotorwelle wirkende Axialkraft ganz oder zumindest größtenteils aufnimmt, bei Anfahrvorgängen der Rotorwelle das hydrodynamische Axiallager entlastet und im Betrieb bei Nenndrehzahl abgeschaltet wird. Erfindungsgemäß erfolgt eine Trennung der den Axialschub aufnehmenden Komponenten in einen statischen Teil, der während des Stillstandes und des Anfahrvorgangs der Turbomaschine den Axialschub ganz bzw. größtenteils aufnimmt, und einen hydrodynamischen Teil, dessen Auslegung und Konstruktion optimal an die während des Betriebs bei Nenndrehzahl herrschenden Bedingungen angepasst werden kann. Dies erlaubt insbesondere eine Reduzierung der Verlustleistung des hydrodynamischen Axiallagers bei Nennbetrieb sowie eine auf die bei Nennbetrieb auftretenden Axialschübe optimal abgestimmte Dimensionierung des hydrodynamischen Axiallagers. Im Stillstand und beim Anfahrvorgang wird das hydrodynamische Axiallager durch das zusätzliche hydrostatische Axiallager weitgehend entlastet. Wenn die Rotorwelle ihre Nenndrehzahl erreicht hat, wird das statische Axiallager abgeschaltet und damit unwirksam, und der Axialschub wird vollständig von dem hydrodynamischen Axiallager aufgenommen.

Vorzugsweise sind die beiden Axiallager an einem freien Ende der Rotorwelle angeordnet. Zweckmäßigerweise weist das hydrostatische Axiallager einen feststehenden, die axialen Kräfte aufnehmenden Kolben auf, dessen Stirnfläche auf die Stirnfläche des entsprechenden Rotorwellendendes gerichtet ist, wobei sich während des Stillstandes und des Anfahrvorgangs der Rotorwelle zwischen den beiden Stirnflächen eine unter Druck stehende Lagerflüssigkeit befindet, welche die beiden Flächen zueinander beabstandet. Der Abstand zwischen den beiden Flächen beträgt vorzugsweise ca. 50 µm, wobei eine Abweichung von bis zu 10 µm nach unten akzeptabel ist. Der als Einsatz ausgebildete Kolben kann eine Bohrung für die Zufuhr der Lagerflüssigkeit in den Zwischenraum zwischen den beiden Stirnflächen aufweisen. Vorzugsweise ist der Kolben in eine Hülse eingeschoben und mit dieser verbunden, wobei die Hülse an einem Gehäuse der Turbomaschine befestigt ist und die von dem Kolben aufgenommenen axialen Kräfte auf das Gehäuse überträgt, und wobei das der Rotorwelle zugewandte Ende der Hülse gleichzeitig zur Einleitung der von dem hydrodynamischen Axiallager übertragenen axialen Kräfte in das Gehäuse dient.

Die Rotorwelle kann einen als Ritzel ausgebildeten Abschnitt aufweisen, der mit einem auf einer zweiten Welle angeordneten Zahnrad eine Getriebeanordnung bildet, wobei an die zweite Welle eine elektrische Maschine angeschlossen ist. Alternativ hierzu ist es jedoch auch möglich, dass die elektrische Maschine direkt an die Rotorwelle angeschlossen ist.

Im Folgenden wird die Erfindung anhand einer lediglich ein Ausführungsbeispiel darstellenden Zeichnung ausführlich erläutert. Es zeigen schematisch:
- Fig. 1: eine erfindungsgemäße Turbomaschine in Schnittdarstellung und
- Fig. 2: einen vergrößerten Ausschnitt der Fig. 1.

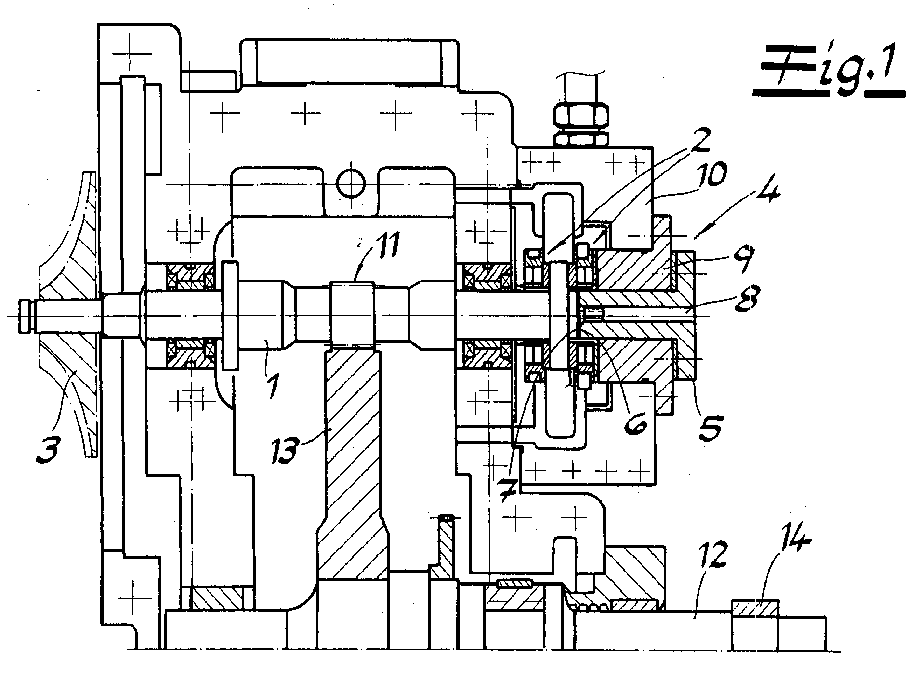

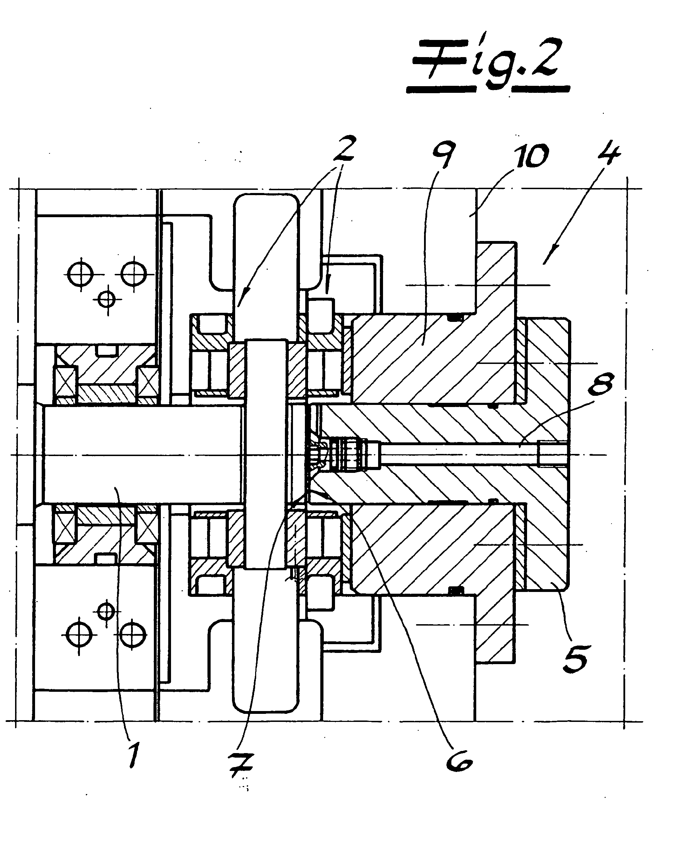

Die Fig. 1 zeigt eine als Verdichter ausgebildete Turbomaschine mit einer Rotorwelle 1, die in einer ein hydrodynamisches Axiallager 2 enthaltenden Lageranordnung gelagert ist. An einem Ende der Rotorwelle 1 ist ein Verdichterlaufrad 3 fliegend angeordnet. In unmittelbarer Nähe des hydrodynamischen Axiallagers 2 ist zusätzlich ein hydrostatisches Axiallager 4 vorgesehen, welches die im Stillstand auf die Rotorwelle 1 wirkende Axialkraft vollständig oder zumindest größtenteils aufnimmt. Bei Anfahrvorgängen der Rotorwelle 1 wird das hydrodynamische Axiallager 2 durch das Axiallager 4 entlastet, während im Betrieb bei Nenndrehzahl das Axiallager 4 abgeschaltet wird. Die beiden Axiallager 2, 4 sind an dem verbleibenden freien Ende der Rotorwelle 1 angeordnet. Insbesondere der Fig. 2 ist zu entnehmen, dass das hydrostatische Axiallager 4 einen feststehenden, die axialen Kräfte aufnehmenden Kolben 5 aufweist, dessen Stirnfläche 6 auf die Stirnfläche 7 des entsprechenden Rotorwellenendes gerichtet ist. Während des Stillstandes und des Anfahrvorgangs der Rotorwelle 1 befindet sich zwischen den beiden Stirnflächen 6, 7 eine unter Druck stehende Lagerflüssigkeit, welche die beiden Flächen 6, 7 zueinander beabstandet. Durch das Abschalten des hydrostatischen Axiallagers 4 nach Erreichen der Nenndrehzahl baut sich dieser Druck ab und der Axialschub wird dann vollständig von dem hydrodynamischen Axiallager 2 aufgenommen. Der Kolben 5 weist eine Bohrung 8 für die Zufuhr der Lagerflüssigkeit in den Zwischenraum zwischen den beiden Stirnflächen 6, 7 auf. Der Kolben 5 ist in eine Hülse 9 eingeschoben und mit dieser verbunden. Die Hülse 9 ist an einem Gehäuse 10 der Turbomaschine befestigt und überträgt die von dem Kolben 5 aufgenommenen axialen Kräfte auf das Gehäuse 10. Gleichzeitig dient das der Rotorwelle 1 zugewandte Ende der Hülse 9 zur Einleitung der von dem hydrodynamischen Axiallager 2 aufgenommenen axialen Kräfte in das Gehäuse 10.

Der Fig. 1 ist zu entnehmen, dass die Rotorwelle 1 einen als Ritzel 11 ausgebildeten Abschnitt aufweist, der mit einem auf einer zweiten Welle 12 angeordneten Zahnrad 13 eine Getriebeanordnung bildet. An einem fliegenden Ende der zweiten Welle 12 ist ein Läufer 14 einer Antriebsmaschine angeordnet.

## Patentansprüche

1. Turbomaschine mit
Rotorwelle (1), die in einer ein hydrodynamisches Axiallager (2) enthaltenden Lageranordnung gelagert ist, und
auf der Rotorwelle (1) angeordnetem Laufrad (3),
wobei in unmittelbarer Nähe des hydrodynamischen Axiallagers (2) zusätzlich ein hydrostatisches Axiallager (4) vorgesehen ist, welches die im Stillstand auf die Rotorwelle (1) wirkende Axialkraft aufnimmt und bei Anfahrvorgängen der Rotorwelle (1) das hydrodynamische Axiallager (2) entlastet, **dadurch gekennzeichnet, dass das** hydrostatische Axiallager (4) im Betrieb bei Nenndrehzahl abgeschaltet wird.

2. Turbomaschine nach Anspruch 1, **dadurch gekennzeichnet, dass** die beiden Axiallager (2, 4) an einem freien Ende der Rotorwelle (1) angeordnet sind.

3. Turbomaschine nach Anspruch 2, **dadurch gekennzeichnet, dass** das hydrostatische Axiallager (4) einen feststehenden, die axialen Kräfte aufnehmenden Kolben (5) aufweist, dessen Stirnfläche (6) auf die Stirnfläche (7) des entsprechenden Rotorwellenendes gerichtet ist, wobei sich während des Stillstandes und des Anfahrvorgangs der Rotorwelle (1) zwischen den beiden Stirnflächen (6, 7) eine unter Druck stehende Lagerflüssigkeit befindet, welche die beiden Flächen (6, 7) zueinander beabstandet.

4. Turbomaschine nach Anspruch 3, **dadurch gekennzeichnet, dass** der Kolben (5) eine Bohrung (8) für die Zufuhr der Lagerflüssigkeit in den Zwischenraum zwischen den beiden Stirnflächen (6, 7) aufweist.

5. Turbomaschine nach Anspruch 3, oder 4, **dadurch gekennzeichnet, dass** der Kolben (5) in eine Hülse (9) eingeschoben und mit dieser verbunden ist, wobei die Hülse (9) an einem Gehäuse (10) der Turbomaschine befestigt ist und die von dem Kolben (5) aufgenommenen axialen Kräfte auf das Gehäuse (10) überträgt, und wobei das der Rotorwelle (1) zugewandte Ende der Hülse (9) gleichzeitig zur Einleitung der von dem hydrodynamischen Axiallager (2) aufgenommenen axialen Kräfte in das Gehäuse (10) dient.

6. Turbomaschine nach einem der Ansprüche 1 bis 5, **dadurch gekennzeichnet, dass** die Rotorwelle (1) einen als Ritzel (11) ausgebildeten Abschnitt aufweist, der mit einem auf einer zweiten Welle (12) angeordneten Zahnrad (13) eine Getriebeanordnung bildet, wobei an die zweite Welle (12) eine Antriebsmaschine angeschlossen ist.

## Claims

1. Turbo machine with a rotor shaft (1) that is mounted in a bearing assembly with a hydrodynamic axial bearing (2), and
a rotor (3) mounted on a rotor shaft (1),
wherein a hydrostatic axial bearing (4), bearing the axial force acting on the rotor shaft (1) at rest, is additionally provided directly near the hydrodynamic axial bearing (2), and relieves the hydrodynamic axial bearing (2) during the rotor shaft's (1) start-up processes, **characterized in that** the hydrostatic axial bearing is switched off during operation at a rated speed.

2. Turbo machine according to Claim 1, **characterized in that** the two axial bearings (2, 4) are mounted on one free end of the rotor shaft (1).

3. Turbo machine according to Claim 2, **characterized in that** the hydrostatic axial bearing (4) features a stationary piston (5) that bears the axial forces, and the face surface (6) of said piston is directed towards the face surface (7) of the corresponding rotor shaft end, wherein a bearing fluid is accommodated between the two face surfaces (6, 7) under pressure during the standstill and start-up process of the rotor shaft (1), said bearing fluid separating said faces (6, 7) with a gap in between.

4. Turbo machine according to Claim 3, **characterized in that** the piston (5) features a bore (8) for supplying the bearing fluid into the interstice between both face surfaces (6, 7).

5. Turbo machine according to Claim 3 or 4, **characterized in that** the piston (5) is fitted inside a sleeve (9) and connected with it such that the sleeve (9) is fixed on a housing (10) of the turbo machine and further transmits the axial forces exerted on the piston to the housing (10), and whereby the end of the sleeve (9) towards the rotor shaft (1) concurrently serves to transfer the axial forces exerted by the hydrodynamic axial bearing (2) onto the housing.

6. Turbo machine according to one of the Claims 1 to 5, **characterized in that** the rotor shaft (1) features a section formed as a pinion (11) that, together with gear wheel (13) mounted on a shaft (12), forms a transmission unit, wherein a drive machine is connected to the second shaft (12).

## Revendications

1. Turbomachine comportant
un arbre de rotor (1) qui est supporté dans un agencement de palier contenant un palier axial hydrodynamique (2), et
une roue tournante (3) montée sur l'arbre de rotor (1),
dans laquelle il est prévu en supplément, à proximité immédiate du palier axial hydrodynamique (2), un palier axial hydrostatique (4) qui reprend la force axiale agissant à l'arrêt sur l'arbre de rotor (1) et soulage le palier axial hydrodynamique (2) lors des phases de démarrage de l'arbre de rotor (1), **caractérisée en ce que** le palier axial hydrostatique (4) est coupé en service, à la vitesse de rotation nominale.

2. Turbomachine selon la revendication 1, **caractérisée en ce que** les deux paliers axiaux (2, 4) sont disposés à une extrémité libre de l'arbre de rotor (1).

3. Turbomachine selon la revendication 2, **caractérisée en ce que** le palier axial hydrostatique (4) comporte un piston (5) fixe, reprenant les forces axiales, dont la surface frontale (6) est orientée vers la surface frontale (7) de l'extrémité d'arbre de rotor correspondante, un liquide de palier sous pression se trouvant entre les deux surfaces frontales (6, 7), pendant l'arrêt et la phase de démarrage de l'arbre de rotor (1), lequel liquide maintient à distance l'une de l'autre les deux surfaces (6, 7).

4. Turbomachine selon la revendication 3, **caractérisée en ce que** le piston (5) comporte un alésage (8) pour l'arrivée du liquide de palier dans l'interstice compris entre les deux surfaces frontales (6, 7).

5. Turbomachine selon la revendication 3 ou 4, **caractérisée en ce que** le piston (5) est inséré dans un fourreau (9) et est relié à celui-ci, le fourreau (9) étant fixé à un carter (10) de la turbomachine et transmettant au carter (10) les forces axiales reprises par le piston (5), et l'extrémité du fourreau (9) orientée vers l'arbre de rotor (1) servant simultanément à appliquer au carter (10) les forces axiales reprises par le palier axial hydrodynamique (2).

6. Turbomachine selon l'une des revendications 1 à 5, **caractérisée en ce que** l'arbre de rotor (1) comporte une section conçue comme un pignon (11) qui forme un engrenage avec une roue dentée (13) montée sur un deuxième arbre (12), une machine d'entraînement étant raccordée au deuxième arbre (12).
